# EUROPÄISCHE PATENTSCHRIFT

(11) **EP 4 043 185 B1**
(45) Veröffentlichungstag und Bekanntmachung des Hinweises auf die Patenterteilung: **09.10.2024**
(21) Anmeldenummer: 21156936.3
(22) Anmeldetag: 12.02.2021
(51) Int. Cl.: B29C 63/36

(54) **VORRICHTUNG ZUM EINBRINGEN UND POSITIONIEREN EINER ROHRLEITUNGSAUSKLEIDUNG IN EIN ROHR SOWIE VERFAHREN ZUM EINBRINGEN UND POSITIONIEREN EINER ROHRLEITUNGSAUSKLEIDUNG IN EIN ROHR**
DEVICE FOR INSERTING AND POSITIONING A PIPE LINER IN A PIPE AND METHOD FOR INSERTING AND POSITIONING A PIPE LINER IN A PIPE
DISPOSITIF D'INTRODUCTION ET DE POSITIONNEMENT D'UNE GARNITURE DE TUYAU DANS UN TUBE, AINSI QUE PROCÉDÉ D'INTRODUCTION ET DE POSITIONNEMENT D'UNE GARNITURE DE TUYAU DANS UN TUBE

(43) Veröffentlichungstag der Anmeldung: 17.08.2022
(73) Patentinhaber: bodus GmbH, 5000 Aarau (CH)
(72) Erfinder: Boller, Daniel, 5064 Wittnau (CH)
(74) Vertreter: Meissner Bolte Partnerschaft mbB

(56) Entgegenhaltungen:
- KR-A- 20180 000 155
- KR-B1- 101 148 135
- US-A- 6 032 698

## Beschreibung

Die Erfindung betrifft eine Vorrichtung zum Einbringen einer Rohrleitungsauskleidung in ein Rohr und zum finalen Positionieren der in einem Rohr eingebrachten Rohrleitungsauskleidung. Eine Vorrichtung gemäß dem Oberbegriff des Patentanspruchs 1 ist beispielsweise aus der US 6 032 698 A bekannt.

Außerdem betrifft die Erfindung ein Verfahren zum Einbringen einer Rohrleitungsauskleidung in ein Rohr und zum finalen Positionieren der in einem Rohr eingebrachten Rohrleitungsauskleidung, wobei zur Durchführung des Verfahrens auf die erfindungsgemäße Vorrichtung zurückgegriffen wird.

Aus dem Stand der Technik ist es bekannt, Rohrleitungen im Inneren mit einer Rohrleitungsauskleidung zu versehen, die beispielsweise eine äußere Kunststoffschicht und eine innere Faserverbund-Schicht aufweist. Derartige Rohrleitungsauskleidungen müssen dabei nachträglich in bereits beispielsweise im Boden verlegten Rohren eingebracht werden.

Des Weiteren ist es oftmals notwendig, dass die bereits eingebrachten Rohrleitungsauskleidungen hinsichtlich der tatsächlichen Position nachjustiert werden müssen. Hierbei ist es bekannt, beispielsweise nachträglich mittels Kalibrierschläuchen eine endgültige bzw. finale Position der Rohrleitungsauskleidung herzustellen. Hierzu ist es notwendig, eine Vorrichtung zu benutzen, mittels deren Hilfe der Kalibrierschlauch in einen bereits verlegten Rohrleitungsauskleidungsabschnitt eingebracht werden kann.

Aus der eingangs genannten US 6 032 698 A ist ein System zum Auskleiden einer Rohrleitung oder eines Kanals bekannt. Das System umfasst eine Drehtrommel, einen Schlauch aus einem kunststoffbeschichteten Gewebe und ein Rückhalte- und Führungsband. Vor dem Auskleiden der Rohrleitung bzw. des Kanals wird der Schlauch mit Klebstoff gefüllt, anschließend verschlossen und in der Drehtrommel aufgewickelt. Nun wird ein Überdruck in der Drehtrommel erzeugt, durch den der Schlauch sich in die Leitung umstülpt und mit seiner klebstoffbenetzten Seite an die Innenwand der Leitung anlegt.

Ein weiteres System zum Auskleiden von Rohrleitungen ist beispielsweise in der KR 101 148 135 B1 offenbart.

Es sind somit eine Vielzahl von Vorrichtungen notwendig, um eine Rohrleitungsauskleidung in ein Rohr einbringen zu können und anschließend die Rohrleitungsauskleidung korrekt positionieren zu können.

Es ist somit Aufgabe der vorliegenden Erfindung, eine weiterentwickelte Vorrichtung anzugeben, wobei die vorerwähnten Nachteile überwunden werden sollen.

Des Weiteren ist es Aufgabe der Erfindung, ein weiterentwickeltes Verfahren zum Einbringen und Positionieren einer Rohrleitungsauskleidung anzugeben.

Erfindungsgemäß wird die erläuterte Aufgabe im Hinblick auf eine Vorrichtung zum Einbringen einer Rohrleistungsauskleidung in ein Rohr und zum finalen Positionieren der in einem Rohr eingebrachten Rohrleitungsauskleidung durch den Gegenstand des Patentanspruches 1 und im Hinblick auf ein Verfahren zum Einbringen einer Rohrleitungsauskleidung in ein Rohr und zum finalen Positionieren der in einem Rohr eingebrachten Rohrleitungsauskleidung durch das Verfahren gemäß Patentanspruch 6 gelöst.

Die Unteransprüche umfassen mindestens zweckmäßige Ausgestaltungen und Weiterbi ld ungen.

Konkret wird die Aufgabe durch eine Vorrichtung zum Einbringen einer Rohrleitungsauskleidung in ein Rohr und zum finalen Positionieren der in einem Rohr eingebrachten Rohrleitungsauskleidung gelöst, wobei die Vorrichtung ein, insbesondere trommelförmiges, Gehäuse umfasst, wobei im Gehäuse eine Aufrollvorrichtung ausgebildet ist und an einer ersten Gehäuseöffnung ein Vorsatzelement, insbesondere ein Vorsatzring, ausgebildet ist. An einer mindestens zweiten Gehäuseöffnung ist wahlweise eine Abdeckplatte oder ein Inverter-Aufsatz befestigt, wobei in einem Zustand zum Einbringen der Rohrleitungsauskleidung der Inverter-Aufsatz und in einem Zustand zum finalen Positionieren der Rohrleitungsauskleidung die Abdeckplatte an der zweiten Gehäuseöffnung befestigt ist.

Erfindungsgemäß ist also eine Vorrichtung vorgesehen, mit deren Hilfe sowohl eine Rohrleitungsauskleidung in ein Rohr eingebracht werden kann, als auch die bereits eingebrachte Rohrleitungsauskleidung final positioniert werden kann.

Die Vorrichtung kann also mindestens in zwei Zuständen vorliegen. Bei einem ersten Zustand kann es sich um den Zustand zum Einbringen der Rohrleitungsauskleidung handeln. In diesem ersten Zustand ist an mindestens der zweiten Gehäuseöffnung ein Inverter-Aufsatz befestigt.

Bei einem zweiten Zustand der Vorrichtung kann es sich um den Zustand zum finalen Positionieren der Rohrleitungsauskleidung handeln. Die Rohrleitungsauskleidung würde in diesem zweiten Zustand bereits in dem Rohr befindlich bzw. eingebracht sein. In dem zweiten Zustand wird eine Abdeckplatte an der zweiten Gehäuseöffnung befestigt. Es ist möglich, dass das Gehäuse weitere Gehäuseöffnungen aufweist. Mindestens sind jedoch zwei Öffnungen ausgebildet, wobei an der ersten Gehäuseöffnung ein Vorsatzelement ausgebildet ist und die mindestens zweite Gehäuseöffnung wahlweise mit einem Inverter-Aufsatz oder mit einer Abdeckplatte verschlossen ist oder wird.

Es ist möglich, dass die Vorrichtung auch in einem dritten Zustand vorliegt. Bei einem derartigen Zustand kann es sich um einen Wartungszustand oder Reinigungszustand handeln. In einem derartigen Zustand ist es möglich, dass die zweite Gehäuseöffnung offen ist bzw. keine weiteren Bauteile an der zweiten Gehäuseöffnung befestigt oder angebracht sind.

Das Gehäuse weist vorzugsweise eine Trommelform auf. Die Trommelform ist insbesondere bei einer Seitenansicht auf das Gehäuse zu erkennen. Diese Seitenansicht erfolgt derart, dass die Ansicht auf die Achsrichtung der Aufrollvorrichtung erfolgt. Mit Hilfe einer derartigen trommelförmigen Ausbildung des Gehäuses ist es möglich, auf der Aufrollvorrichtung einen Schlauch, insbesondere einen Kalibrierschlauch, wie gewöhnlich mit Hilfe einer Haspel aufzurollen.

An der ersten Gehäuseöffnung ist ein Vorsatzelement ausgebildet. Bei dem Vorsatzelement kann es sich um einen Abschnitt des Gehäuses oder um ein separates Bauteil handeln. Des Weiteren ist es möglich, dass das Vorsatzelement sowohl aus einem Gehäuseabschnitt als auch aus einem separat angebrachten Bauteil gebildet ist. Aus der ersten Gehäuseöffnung wird sowohl ein Ende der Rohrleitungsauskleidung geführt, als auch ein Ende eines Kalibrierschlauches. Dies ist davon abhängig, in welchem Zustand die Vorrichtung tatsächlich vorliegt, bzw. welcher Verfahrensschritt mit Hilfe der erfindungsgemäßen Vorrichtung ausgeführt werden soll. Die zweite Gehäuseöffnung dient insbesondere zum Einführen einer Rohrleitungsauskleidung in das Gehäuse. Mit anderen Worten wird die zweite Gehäuseöffnung insbesondere im ersten Zustand der Vorrichtung benötigt. Im zweiten Zustand der erfindungsgemäßen Vorrichtung ist es insbesondere notwendig, die zweite Gehäuseöffnung zu verschließen.

Es ist möglich, dass das trommelförmige Gehäuse in einem zur ersten Gehäuseöffnung weisenden Abschnitt eine rohrartige Verjüngung aufweist. Diese rohrartige Verjüngung kann auch als schnabelartiger Gehäuseabschnitt bezeichnet werden. Der schnabelartige Gehäuseabschnitt vereinfacht insbesondere die Ausrichtung der Vorrichtung in Relation zu dem Rohr, in dem die Rohrleitungsauskleidung eingebracht werden soll bzw. final positioniert werden soll.

An einem derartigen Gehäuseabschnitt könnte dann ein zusätzliches Bauteil, beispielsweise ein (weiteres) Vorsatzelement, insbesondere ein (weiterer) Vorsatzring, befestigt werden.

Ein finales Positionieren der in einem Rohr eingebrachten Rohrleitungsauskleidung beschreibt das Positionieren einer Rohrleitungsauskleidung an einem Rohr, so dass die Rohrleitungsauskleidung entweder bereits dicht an dem Rohr anliegt oder derart korrekt in dem Rohr positioniert ist, dass eine weitere Bearbeitung der Rohrleitungsauskleidung, beispielsweise ein Härten der Rohrleitungsauskleidung erfolgen kann.

Bei dem Inverter-Aufsatz handelt es sich um ein derartiges Bauteil, das lösbar an der zweiten Gehäuseöffnung angebracht werden kann. Als Inverter-Aufsatz wird im Folgenden ein derartiges Bauteil bezeichnet, das während des Einbringens einer Rohrleitungsauskleidung notwendig ist. Mit Hilfe des Inverter-Aufsatzes kann die Rohrleitungsauskleidung derart in das Gehäuse eingeführt und anschließend in das Rohr eingebracht werden, dass die Rohrleitungsauskleidung im Rohr im Vergleich zum Ausgangszustand in invertierter Form vorliegt. Als Ausgangszustand der Rohrleitungsauskleidung ist der Zustand zu verstehen, der vor dem Einführen der Rohrleitungsauskleidung in die erfindungsgemäße Vorrichtung, insbesondere vor Einführen der Rohrleitungsauskleidung in das Rohr, vorliegt. Der Inverter-Aufsatz kann auch als Rohrleitungsauskleidungs-Adapter bezeichnet werden.

Vorzugsweise kann der Inverter-Aufsatz an der zweiten Gehäuseöffnung angeschraubt werden. Hierzu weist der Inverter-Aufsatz vorzugsweise einen flanschartigen Abschnitt auf. Der flanschartige Abschnitt weist vorzugsweise Öffnungen auf, wobei durch diese Öffnungen Befestigungselemente, insbesondere Befestigungsschrauben, durchgeführt werden können. Vorzugsweise ist im Bereich der zweiten Gehäuseöffnung der Vorrichtung ein flanschartiger Abschnitt ausgebildet, so dass ein flanschartiger Abschnitt der zweiten Gehäuseöffnung am flanschartigen Abschnitt eines Inverter-Aufsatzes anliegt. Die lösbare Verbindung kann dann mittels Befestigungselementen, insbesondere mittels Schrauben oder mittels Schraub-Mutter-Verbindungen, erfolgen.

Es ist möglich, dass der Inverter-Aufsatz eine Abdichtungsmanschette und/oder einen Druckluftanschluss aufweist. Mit Hilfe einer Abdichtungsmanschette ist es möglich, den Inverter-Aufsatz und folglich die zweite Gehäuseöffnung der Vorrichtung derart gegenüber einer einzuführenden Rohrleitungsauskleidung abzudichten, so dass ein auf die Rohrleitungsauskleidung wirkender Druck nicht verlorengeht, sondern direkt auf die Rohrleitungsauskleidung wirkt. Dies vereinfacht das Einführen einer Rohrleitungsauskleidung in ein Rohr.

Des Weiteren kann der Inverter-Aufsatz mindestens einen Druckluftanschluss aufweisen. Der Druckluftanschluss kann insbesondere dazu dienen, eine ausreichende Abdichtung mit Hilfe einer Abdichtungsmanschette herzustellen. Hierzu weist der Inverter-Aufsatz vorzugsweise einen flexiblen Kammerabschnitt auf. Der flexible Kammerabschnitt wird beispielsweise zwischen einer Abdichtungsmanschette und einem Inverter-Gehäuseabschnitt gebildet. Mit Hilfe eines Druckluftanschlusses kann in diesen flexiblen Kammerabschnitt Druckluft gepumpt werden, derart, dass die Abdichtungsmanschette aufgeweitet und der Kammerabschnitt vergrößert wird. Die Abdichtungsmanschette kann in dieser Form gegen die Rohrleitungsauskleidung gedrückt werden.

Die Abdichtungsmanschette ist vorzugsweise aus einem gummiartigen Material gebildet.

In einer weiteren Ausführungsform der Erfindung ist es vorgesehen, dass das Gehäuse der Vorrichtung einen Druckluftanschluss aufweist. Der Druckluftanschluss kann dazu dienen, das Gehäuse selbst unter Druck zu setzen. Beispielsweise wird dies im zweiten Zustand der Vorrichtung durchgeführt. Dies erleichtert beispielsweise das Ausbringen eines Kalibrierschlauches.

Der Inverter-Aufsatz kann außerdem eine Druckablassöffnung aufweisen. Mit Hilfe einer Druckablassöffnung kann die im Inverter-Aufsatz gebildete Druckluft entweichen.

Das Gehäuse kann eine Druckluft-Ablassöffnung aufweisen. Mit Hilfe der Druckluft-Ablassvorrichtung kann ein im Gehäuse der Vorrichtung ausgebildeter Druck abgelassen werden.

In einer bevorzugten Ausführungsform der Erfindung ist im Gehäuse der Vorrichtung ein Führungsabschnitt zur Durchführung der Rohrleitungsauskleidung ausgebildet. Der Führungsabschnitt verläuft ausgehend von der zweiten Gehäuseöffnung bis zur ersten Gehäuseöffnung. Mit Hilfe des Führungsabschnittes soll die Rohrleitungsauskleidung von der zweiten Gehäuseöffnung bis zur ersten Gehäuseöffnung geführt werden.

Vorzugsweise sind die mindestens erste und zweite Gehäuseöffnung derart im Gehäuse angeordnet, dass die Öffnungsachsen sich im Gehäuse der Vorrichtung mittig schneiden. Die Gehäusemitte ist vorzugsweise der Abschnitt des Gehäuses, der der Längsachse der Aufrollvorrichtung entspricht. Mit anderen Worten können sich die Öffnungsachsen der ersten Gehäuseöffnung und der zweiten Gehäuseöffnung im Bereich der Längsachse der Aufrollvorrichtung schneiden. Vorzugsweise verlaufen die Gehäuseöffnungsachsen in einem stumpfen Winkel zueinander. Dies ermöglicht es, dass eine Rohrleitungsauskleidung beginnend von der zweiten Gehäuseöffnung in Richtung der ersten Gehäuseöffnung nicht stark geknickt werden muss. Vielmehr kann die Rohrleitungsauskleidung auch im in der Vorrichtung geführten Zustand zumindest abschnittsweise geradlinig verlaufen.

Der stumpfe Winkel der Gehäuseöffnungsachsen beträgt vorzugsweise zwischen 110° und 150°, besonders bevorzugt zwischen 140° und 145°, besonders bevorzugt zwischen 130° und 140°.

Vorzugsweise ist im ersten Zustand auf der Aufrollvorrichtung ein Kalibrierschlauch aufgewickelt. Bei der Aufrollvorrichtung kann es sich beispielweise um eine elektrisch bedienbare Aufrollvorrichtung handeln. Des Weiteren weist die Aufrollvorrichtung vorzugsweise eine Verriegelung auf, so dass die Aufrollvorrichtung gegen unerwünschtes Ab- bzw. Aufrollen gesichert ist. Vorzugsweise ist die Verriegelung im ersten Zustand der Vorrichtung entsprechend zu setzen.

Vorzugsweise ist das Gehäuse der Vorrichtung auf einer Transportvorrichtung befestigt. Bei der Transportvorrichtung kann es sich um eine sackkarrenartige Vorrichtung handeln. Vorzugsweise weist die Transportvorrichtung mindestens zwei Räder bzw. Rollen sowie mindestens eine Griffeinheit auf, so dass die erfindungsgemäße Vorrichtung einfach transportiert werden kann.

Ein weiterer Aspekt der Erfindung betrifft ein Verfahren zum Einbringen einer Rohrleitungsauskleidung in ein Rohr und zum finalen Positionieren der in einem Rohr eingebrachten Rohrleitungsauskleidung. Das erfindungsgemäße Verfahren sieht eine Verwendung der erfindungsgemäßen Vorrichtung vor. Das erfindungsgemäße Verfahren umfasst die Schritte:
a) Bereitstellen einer erfindungsgemäßen Vorrichtung, wobei ein Kalibrierschlauch auf der Aufrollvorrichtung wobei ein Kalibrierschlauch auf der Aufrollvorrichtung aufgewickelt ist,
b) Befestigen des Inverter-Aufsatzes an der zweiten Gehäuseöffnung,
c) Durchführen eines ersten Endes der Rohrleitungsauskleidung von der zweiten Gehäuseöffnung bis zur ersten Gehäuseöffnung und Befestigen des ersten Endes der Rohrleitungsauskleidung an dem Vorsatzelement,
d) Aufbauen eines Druckes, insbesondere mittels Druckluft, am Inverter-Aufsatz und/oder im Gehäuse,
e) Einbringen der Rohrleitungsauskleidung in das Rohr.

Die erfindungsgemäßen Schritte a) bis e) sind vorzugsweise in der angegebenen Reihenfolge durchzuführen. Es ist möglich, dass die Schritte a) und b) beispielsweise gleichzeitig oder in vertauschter Reihenfolge durchgeführt werden. Wichtig ist bei der Durchführung der angegebenen Schritte, dass zunächst ein erster Zustand der Vorrichtung zum Einbringen der Rohrleitungsauskleidung in ein Rohr hergestellt wird.

Es ist möglich, dass zwischen Schritt c) und e) in Richtung des Rohres abschnittsweise ein Stützschlauch verlegt wird, wobei der Stützschlauch über das erste Ende der Rohrleitungsauskleidung gestülpt am Vorsatzelement befestigt wird.

Mit Hilfe eines Stützschlauches, der vorzugsweise den freien Abschnitt zwischen der ersten Öffnung der Vorrichtung und dem Beginn des zu bearbeitenden bzw. sanierenden Rohres überbrückt, kann die Rohrleitungsauskleidung einfacher in das Rohr eingeführt werden. Der Stützschlauch dient in diesem Fall als eine Art Führung, so dass die Rohrleitungsauskleidung gezielt in das Rohr eingeführt werden kann.

Der Stützschlauch kann beispielsweise bis in das zu sanierende Rohr bzw. das zu bearbeitenden Rohr eingeführt werden. Beispielsweise kann der Stützschlauch ca. 10 cm in das zu bearbeitende Rohr hineinragen. Der Stützschlauch wird vorzugsweise über das erste Ende der Rohrleitungsauskleidung geführt und in diesem am ersten Ende der Rohrleitungsauskleidung anliegenden Zustand am Vorsatzelement, insbesondere am Vorsatzring befestigt. Die Befestigung kann beispielsweise mittels Spanngurten und/oder Spannringen erfolgen.

Das Einbringen des Stützschlauches erfolgt zwischen Schritt c) und e). Vorzugsweise erfolgt dieser Schritt zwischen den Schritten c) und d).

Im Schritt c) wird das erste Ende der Rohrleitungsauskleidung an dem Vorsatzelement befestigt. Hierzu wird die schlauchartige Rohrleitungsauskleidung zunächst durch das Gehäuse hindurchgeführt und am ersten Ende umgestülpt. Am ersten Ende der Rohrleitungsauskleidung wird somit die innenliegende Seite der Rohrleitungsauskleidung nach außen umgeschlagen, so dass die zunächst innenliegende Seite der Rohrleitungsauskleidung im am Vorsatzelement befestigten Zustand dann die Außenseite bildet.

Aufgrund des Befestigens der ersten Rohrleitungsauskleidung in nach außen gestülpter Form am Vorsatzelement, kann beim Einbringen der Rohrleitungsauskleidung in das Rohr die Rohrleitungsauskleidung vollständig von innen nach außen gestülpt im Rohr eingebracht werden. Aufgrund dieses Nach-außen-Stülpens der Rohrleitungsauskleidung kann die Rohrleitungsauskleidung besonders bevorzugt mit Harzgemischen getränkt werden. Der Harzauftrag erfolgt vorzugsweise im Inneren der Rohrleitungsauskleidung und wird aufgrund des Nach-außen-Stülpens erst im Rohr derart nach außen bewegt, dass eine besonders einfache Handhabung der bereits mit Harz getränkten Rohrleitungsauskleidung ermöglicht wird.

Der Schritt a) kann außerdem vorsehen, dass bei der Bereitstellung der erfindungsgemäßen Vorrichtung beispielsweise ein Rückhalteseil mit der Vorrichtung verbunden wird und beispielsweise zusammen mit einem Zirkulationsschlauch und einem Kondensat-Ablassschlauch in der Vorrichtung aufgerollt wird.

Der Kalibrierschlauch ist auf der Aufrollvorrichtung vorzugsweise derart aufgewickelt, dass das zweite Ende des Kalibrierschlauches als erstes auf der Aufrollvorrichtung aufgewickelt wird. Als zweites Ende des Kalibrierschlauches ist das Ende des Kalibrierschlauches zu verstehen, das bei einem Abrollvorgang des Kalibrierschlauches als letztes abgerollt ist bzw. das letzte abgerollte Stück des Kalibrierschlauches darstellt.

Im Schritt c) kann das erste Ende der Rohrleitungsauskleidung beispielsweise mittels Spanngurten und/oder Spannringen an dem Vorsatzelement befestigt werden.

In einer weiteren Ausführungsform der Erfindung umfasst das Verfahren den Schritt f). Gemäß Schritt f) wird nach vollständiger Durchführung des Schrittes e) aus dem Inverter-Aufsatz und/oder aus dem Gehäuse der Druck abgelassen. Mit anderen Worten wird nach vollständigem Einbringen der Rohrleitungsauskleidung in das Rohr zunächst der vorher aufgebrachte Druck aus dem Inverter-Aufsatz und/oder aus dem Gehäuse abgelassen.

Erst nach dem Ablassen des Druckes kann im Schritt g) der Inverter-Aufsatz vom Gehäuse entfernt werden. Es kann dann die Abdeckplatte derart an der zweiten Gehäuseöffnung befestigt werden, dass die zweite Gehäuseöffnung verschlossen wird.

Im ersten Zustand der Vorrichtung wird die zweite Gehäuseöffnung nicht vollständig verschlossen. Vielmehr wird mittels des Inverter-Aufsatzes eine Art Zugang zum Gehäuse hergestellt, so dass von außen mittels des Inverter-Aufsatzes die Rohrleitungsauskleidung in die Vorrichtung eingeführt werden kann.

Es ist außerdem möglich, dass in einem Schritt h) das erste Ende der Rohrleitungsauskleidung und der optional befestigte Stützschlauch vom Vorsatzelement entfernt werden. Der Schritt h) wird vorzugsweise nach dem Schritt f) durchgeführt. Es ist möglich, dass der Schritt h) nach dem Schritt g) durchgeführt wird. Des Weiteren ist es möglich, dass der Schritt h) zwischen den Schritten f) und g) durchgeführt wird.

Sofern der Schritt h) durchgeführt wurde, liegt zunächst am Vorsatzelement kein weiteres Bauteil und/oder kein weiterer Schlauchabschnitt an.

Es ist möglich, dass im Schritt i) ein erstes Ende des Kalibrierschlauches von der Aufrollvorrichtung abgerollt und am Vorsatzelement befestigt wird. Die Befestigung des ersten Endes des Kalibrierschlauches am Vorsatzelement erfolgt vorzugsweise derart, dass der Kalibrierschlauch ebenfalls nach außen gestülpt und in dieser nach außen gestülpten Form am Vorsatzelement befestigt wird. Die Befestigung am Vorsatzelement kann mittels Spanngurten und/oder Spannringen erfolgen.

Es ist gemäß einem Schritt j) möglich, dass das erste Ende der Rohrleitungsauskleidung und optional der Stützschlauch wiederum über das erste Ende des Kalibrierschlauchs gestülpt und am Vorsatzelement befestigt werden. Über dem am Vorsatzelement angebrachten Kalibrierschlauch kann zunächst das erste Ende der Rohrleitungsauskleidung und anschließend der Stützschlauch geführt werden, so dass am Vorsatzelement von innen nach außen das erste Ende des Kalibrierschlauchs, das erste Ende der Rohrleitungsauskleidung und optional der Stützschlauch angebracht und befestigt sein können.

Bei einer derartigen Befestigung der Rohrleitungsauskleidung sowie des Stützschlauches ist es möglich, dass der Kalibrierschlauch besonders gut wirkt, da weder die Rohrleitungsauskleidung noch ein optional vorgesehener Stützschlauch während des Kalibriervorganges in unerwünschter Art und Weise verschoben werden. Durch Anbringung des Stützschlauches erfolgt wiederum eine gute Führung des Kalibrierschlauches von der ersten Gehäuseöffnung bis zum Anfang des Rohres. Auch in diesem Fall kann der Stützschlauch in etwa 10 cm in das Rohr hineinragen.

Im Schritt k) wird in dem Gehäuse ein derartiger Druck aufgebaut, dass der Kalibrierschlauch aufgrund des Druckaufbaus in der Rohrleitungsauskleidung positioniert und aufgeweitet wird und dadurch die Rohrleitungsauskleidung final positioniert wird. Der Kalibrierschlauch wird aufgrund des Druckaufbaus von der Aufrollvorrichtung abgerollt und immer weiter in das Rohr, insbesondere in die Rohrleitungsauskleidung, geschoben.

Der Kalibrierschlauch invertiert aus der Vorrichtung in die Rohrleitungsauskleidung. Der Vorgang k) wird vorzugsweise derart lang fortgesetzt, bis der Kalibrierschlauch vollständig eingebaut ist. Sofern die Vorrichtung ein Rückhalteseil aufweist, können Längen-Markierungen am Rückhalteseil Informationen über die Position des Kalibrierschlauches wiedergeben. Mit Hilfe des Rückhalteseils kann die Position des zweiten Endes des Kalibrierschlauches jederzeit nachvollzogen werden.

Die Geschwindigkeit zur Durchführung des Schrittes k) kann mit Hilfe des im Gehäuse aufgebauten Drucks geregelt und mit Hilfe des Rückhalteseils kontrolliert werden.

Bei der Rohrleitungsauskleidung kann es sich um mit Harz applizierte Vliesschläuche handeln. Derartige Rohrleitungsauskleidungen sind auch als Schlauch-Liner bekannt. Beim Einbringen der Rohrleitungsauskleidung in das Rohr wird die Innenseite der Rohrleitungsauskleidung nach außen umgekehrt. Ein derartiges Einbringen einer Rohrleitungsauskleidung wird auch als Invertieren bezeichnet.

Mit Hilfe einer Beaufschlagung mittels Druckluft wird im Schritt e) die Rohrleitungsauskleidung komplett ausgestoßen und liegt anschließend in invertierter Form vor. Nach dem vollständig korrekten Positionieren bzw. dem finalen Positionieren liegt die Rohrleitungsauskleidung in einer derartigen Form vor, dass das Harz der Rohrleitungsauskleidung gehärtet werden kann. Ein derartiger Härtungsprozess kann beispielsweise mittels Dampf und/oder mittels Infrarotstrahlung erfolgen. Während des Aushärtungsvorganges sind keine weiteren Positionierungsschritte vorzunehmen, da die Rohrleitungsauskleidung bereits in korrekter Position vorliegt.

Das erfindungsgemäße Verfahren baut darauf auf, dass eine erfindungsgemäße Vorrichtung verwendet wird. Mit Hilfe der erfindungsgemäßen Vorrichtung ist es erstmals möglich, sowohl das Einführen bzw. Einbringen einer Rohrleitungsauskleidung als auch das finale Positionieren der Rohrleitungsauskleidung mit Hilfe einer einzigen Vorrichtung durchführen zu können. Dies steht im Zusammenhang mit einer massiven Einsparung von vorzuhaltenden Vorrichtungen.

Die Erfindung wird im Folgenden anhand von Ausführungsbeispielen unter Bezugnahme auf die beigefügten schematischen Zeichnungen näher erläutert.

Hierbei zeigen:
- Fig. 1a bis 1c: die erfindungsgemäße Vorrichtung in verschiedenen Zuständen;
- Fig. 2a und 2b: eine Schnittdarstellung hinsichtlich eines Inverter-Aufsatzes ohne und mit eingelegter Rohrleitungsauskleidung; und
- Fig. 3a und 3c: verschiedene Stadien des erfindungsgemäßen Verfahrens.

Im Folgenden werden für gleiche und gleich wirkende Bauteile dieselben Bezugsziffern verwendet.

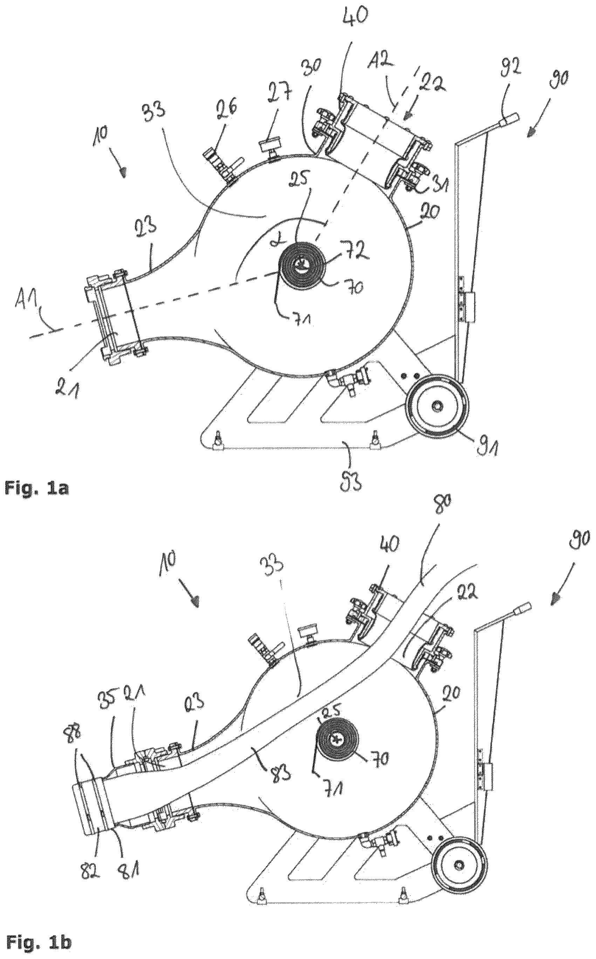

In Fig. 1a wird der prinzipielle Aufbau einer erfindungsgemäßen Vorrichtung 10 dargestellt. Die Vorrichtung 10 weist ein trommelförmiges Gehäuse 20 auf, wobei im Gehäuse 20 eine Aufrollvorrichtung 25 ausgebildet ist. Die Aufrollvorrichtung 25 kann im einfachsten Fall als eine Art Achse ausgebildet sein, wobei ein Schlauch, nämlich ein Kalibrierschlauch 70, auf der Aufrollvorrichtung 25 aufgerollt sein kann.

Der Kalibrierschlauch 70 weist ein erstes Ende 71 sowie ein zweites Ende 72 auf. Das zweite Ende 72 ist im vorliegenden Fall als erstes aufgerollt bzw. aufgewickelt, so dass das erste Ende 71 das zuletzt aufgewickelte bzw. zuletzt aufgerollte Ende des Kalibrierschlauchs 70 darstellt. Das Gehäuse 20 ist auf einer Transportvorrichtung 90 befestigt. Die Transportvorrichtung 90 weist im Wesentlichen zwei Rollen 91, einen Griffabschnitt 92 sowie ein Gestell 93 auf. Mit Hilfe des Gestells 93 wird unter anderem verhindert, dass die Transportvorrichtung im Stand kippen kann. Das Gestell 93 ermöglicht somit einen guten Stand der Vorrichtung 10 während Durchführung des erfindungsgemäßen Verfahrens.

Das Gehäuse 20 weist im Wesentlichen eine Trommelform auf. Das Gehäuse 20 weist außerdem eine erste Gehäuseöffnung 21 und eine zweite Gehäuseöffnung 22 auf. Das Gehäuse 20 weist in Richtung der ersten Gehäuseöffnung 21 weisend einen Gehäuseabschnitt 23 auf. Dieser Gehäuseabschnitt 23 verläuft in Richtung der ersten Gehäuseöffnung 21 verjüngend. Mit Hilfe eines derartigen Gehäuseabschnittes 23 kann eine Art der Führung im Gehäuse 20 gewährleistet werden.

Des Weiteren weist das Gehäuse 20 mindestens einen Druckluftanschluss 26 und eine Druckluftanzeige bzw. ein Manometer 27 auf.

Im Bereich der zweiten Gehäuseöffnung 22 ist ein Gehäuseöffnungsabschnitt 30 ausgebildet. Dieser Gehäuseöffnungsabschnitt 30 dient insbesondere zur Fixierung von verschiedenen Bauteilen. Der Gehäuseöffnungsabschnitt 30 weist hierzu ein Flanschelement 31 auf.

Die Gehäuseöffnungen 21 und 22 weisen jeweils eine erste Gehäuseöffnungsachse A1 und eine zweite Gehäuseöffnungsachse A2 auf. Es ist zu erkennen, dass sich die beiden Gehäuseöffnungsachsen A1 und A2 im Bereich der Aufrollvorrichtung 25, d. h. im Bereich der Längsachse der Aufrollvorrichtung 25 treffen. Die Gehäuseöffnungsachsen A1 und A2 liegen in einem Winkel α zueinander. Der Winkel α ist vorzugsweise ein stumpfer Winkel und beträgt vorzugsweise 135°.

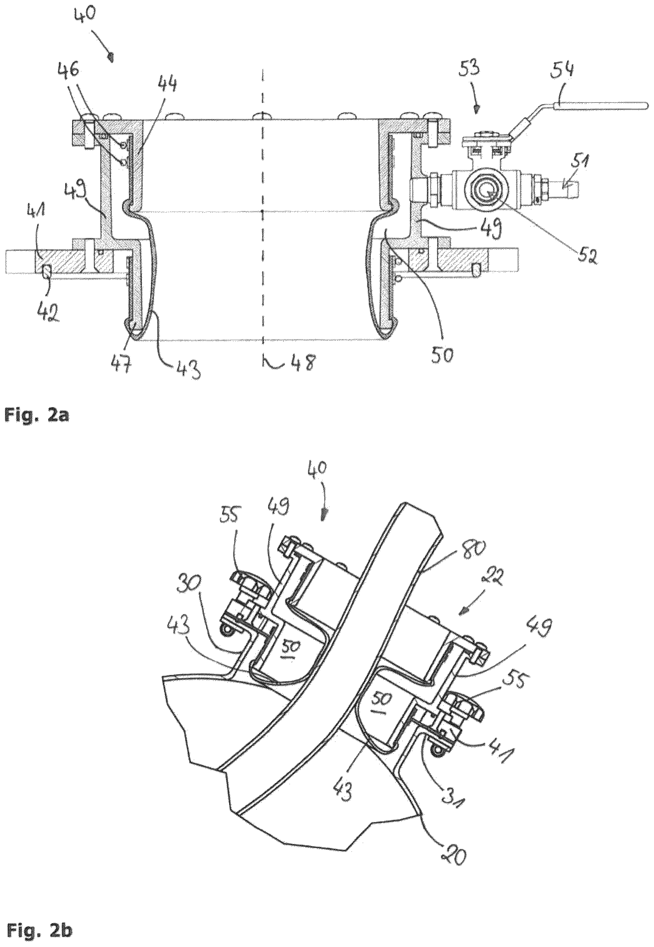

Bei Ausbilden eines derartigen Winkels ist es möglich, eine Rohrleitungsauskleidung relativ winkelfrei im Gehäuse 20 führen zu können (siehe Fig. 1b). In Fig. 1a ist an der Gehäuseöffnung 22 ein Inverter-Aufsatz 40 befestigt. Eine genauere Darstellung des Inverter-Aufsatzes 40 ist der Fig. 2 zu entnehmen.

Im Gehäuse 20 ist außerdem ein Führungsabschnitt 33 ausgebildet. Mit Hilfe des Führungsabschnittes 33 kann ein Schlauch, insbesondere eine Rohrleitungsauskleidung 80, von der zweiten Gehäuseöffnung 22 in Richtung der ersten Gehäuseöffnung 21 geführt werden.

In Fig. 1b ist die Vorrichtung 10 gemäß einem ersten Zustand zum Einbringen der Rohrleitungsauskleidung 80 in ein Rohr dargestellt. Es ist zu erkennen, dass die Rohrleitungsauskleidung 80 von der zweiten Gehäuseöffnung 22 zur ersten Gehäuseöffnung 21 geführt ist. Am ersten Ende 81 der Rohrleitungsauskleidung 80 ist die Rohrleitungsauskleidung 80 an einem Vorsatzelement 35 befestigt. Bei dem Vorsatzelement 35 handelt es sich um einen Vorsatzring.

Das Vorsatzelement 35 ist im dargestellten Beispiel am Gehäuseabschnitt 23 befestigt. Es ist auch möglich, dass das Vorsatzelement 35 als ein in das Gehäuse 20 integriertes Bauteil ausgebildet ist. Die Rohrleitungsauskleidung 80 ist mit dem ersten Ende 81 derart am Vorsatzelement 35 angeordnet bzw. befestigt, dass die Innenseite 82 nach außen gestülpt ist und in dem befestigten Zustand die Außenseite der Rohrleitungsauskleidung 80 bildet. Im in der Vorrichtung 10 befindlichen Zustand ist hingegen die Außenseite 83 zu erkennen.

Das erste Ende 81 der Rohrleitungsauskleidung 80 wird vorzugsweise mittels Spanngurten 88 am Vorsatzelement 35 montiert.

Im ersten Zustand der Vorrichtung 10 ist die Aufrollvorrichtung 25 derart fixiert, dass der Kalibrierschlauch 70 während des Einbringens der Rohrleitungsauskleidung 80 nicht von der Aufrollvorrichtung 25 abgerollt wird.

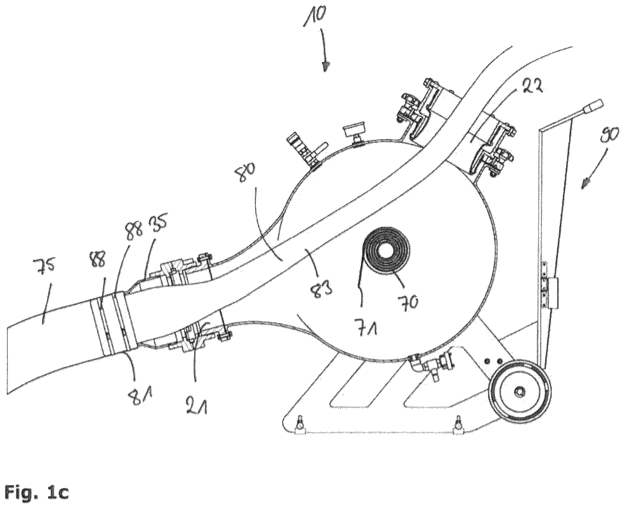

In Fig. 1c ist zusätzlich dargestellt, dass ein Stützschlauch 75 am Vorsatzelement 35 befestigt werden kann. Der Stützschlauch wird über das umgestülpte erste Ende 81 der Rohrleitungsauskleidung 80 geschoben und im vorliegenden Fall ebenfalls mittels Spanngurten 88 am Vorsatzelement 35 befestigt. Der Stützschlauch 75 dient zur geführten Einbringung der Rohrleitungsauskleidung in das Rohr. Der Stützschlauch 75 reicht vorzugsweise bis in das Rohr. Beispielsweise kann der Stützschlauch 75 bis zu 10 cm in das Rohr hineinragen, so dass die Rohrleitungsauskleidung 80 besonders einfach in das Rohr einzuführen ist, ohne dass die Rohrleitungsauskleidung 80 während des Einbringens unkontrolliert in den sonst freien Raum zwischen dem Rohr und der ersten Gehäuseöffnung 21 bewegbar ist.

In Fig. 2a ist der Inverter-Aufsatz 40 detaillierter dargestellt. Als ein Inverter-Aufsatz ist ein derartiges Bauteil zu verstehen, das zur Einbringung einer Rohrleitungsauskleidung 80 in ein Rohr notwendig ist, wobei das Einbringen der Rohrleitungsauskleidung 80 derart erfolgt, dass während des Einführens der Rohrleitungsauskleidung 80 in ein Rohr eine derartige Umkehr der Seiten der Rohrleitungsauskleidung erfolgt, dass die vormals ausgebildete Innenseite der Rohrleitungsauskleidung mittels Druckluft nach außen gestülpt bzw. invertiert wird. Der Inverter-Aufsatz 40 kann auch als Rohrleitungsauskleidungs-Adapter bezeichnet werden.

In Fig. 2a wird der Inverter-Aufsatz 40 ohne eine eingelegte Rohrleitungsauskleidung 80 dargestellt. In Fig. 2b wird die Funktion des Inverter-Aufsatzes 40 anhand einer eingelegten Rohrleitungsauskleidung 80 dargelegt.

Der Inverter-Aufsatz 40 weist zunächst ein Flanschelement 41 auf. Mit Hilfe des Flanschelementes 41 des Inverter-Aufsatzes 40 kann eine Befestigung des Inverter-Aufsatzes 40 am Flanschelement 31 des Gehäuses 20 ermöglicht werden. Zur Erzielung einer abdichtenden Funktion ist ein Dichtring 42 vorgesehen.

Der Inverter-Aufsatz 40 weist im Wesentlichen eine Abdichtungsmanschette 43 sowie einen ersten Befestigungsfortsatz 44 auf. Am ersten Befestigungsfortsatz 44 kann ein Ende der Abdichtungsmanschette 43 beispielsweise mittels Rohrschellen 46 erfolgen.

An einem zweiten Befestigungsfortsatz 47 ist das zweite Ende der Abdichtungsmanschette 43 befestigt. Auch an diesen Befestigungsfortsatz 47 kann die Befestigung mittels Rohrschellen 46 erfolgen. Die Abdichtungsmanschette ist vorzugsweise aus Kunststoff gefertigt.

Die Abdichtungsmanschette weist eine derartige Länge auf, dass diese in Richtung Mitte 48 des Inverter-Aufsatzes 40 aufgeblasen werden kann. Mit Hilfe der Abdichtungsmanschette wird zwischen der Abdichtungsmanschette 43 und dem Inverter-Gehäuseabschnitt 49 ein flexibler Kammerabschnitt 50 gebildet.

Das Volumen des flexiblen Kammerabschnittes 50 kann vergrößert oder verkleinert werden. Hierzu weist der Inverter-Aufsatz 40 einen Druckluft-Zugang 51 sowie einen Druckluft-Auslass 52 auf. Im dargestellten Beispiel kann der Druckluft-Zugang 51 sowie der Druckluft-Auslass 52 als Teil eines 3-Wege-Ventils 53 verwirklicht werden. Im dargelegten Beispiel handelt es sich konkret um einen 3-Wege-Muffen-Kugelhahn. Durch Betätigung des Griffes 54 kann Druckluft wahlweise zugeführt oder abgelassen werden. Mit zunehmendem Einlass von Druckluft in den flexiblen Kammerabschnitt 50 wird die Abdichtungsmanschette 43 in Richtung der Mitte 48 des Inverter-Aufsatzes 40 aufgeblasen.

In Fig. 2b ist der aufgeblasene Zustand der Abdichtungsmanschette 43 und somit ein großes Volumen hinsichtlich des flexiblen Kammerabschnittes 50 dargestellt. Des Weiteren sind Befestigungsmittel 55 zu erkennen, mit deren Hilfe eine Befestigung des Inverter-Aufsatzes 40 an dem Gehäuse 20 bzw. am Gehäuseöffnungsabschnitt 30 ermöglicht wird. Die Befestigungsmittel 55 sind in diesem Fall als Schraubverbindungen ausgebildet.

In der in Fig. 2b dargestellten Konfiguration kann eine eingelegte Rohrleitungsauskleidung 80 zum einen in Richtung der ersten Gehäuseöffnung 51 bewegt werden, wobei zum anderen aufgrund der Abdichtungsmanschette die zweite Gehäuseöffnung 22 gegenüber der einzuführenden Rohrleitungsauskleidung abgedichtet wird. Ein auf die Rohrleitungsauskleidung 80 wirkender Druck geht nicht verloren, sondern wirkt direkt auf die Rohrleitungsauskleidung 80. Dies vereinfacht das Einführen einer Rohrleitungsauskleidung 80 in ein Rohr.

Sofern die Rohrleitungsauskleidung 80 vollständig in das Rohr eingebracht wurde, kann die im flexiblen Kammerabschnitt 50 befindliche Druckluft über den Auslass 52 abgelassen werden. Die Abdichtungsmanschette 53 wird wieder in Richtung des seitlichen Inverter-Gehäuseabschnittes 49 bewegt, so dass das Volumen des flexiblen Kammerabschnittes 50 wieder kleiner wird. Der Druck auf eine Rohrleitungsauskleidung 80 nimmt in diesem Fall ab, so dass das Ende der Rohrleitungsauskleidung 80 wieder einfach handhabbar ist und zugleich der Inverter-Aufsatz 40 vom Gehäuse 20 demontiert werden kann.

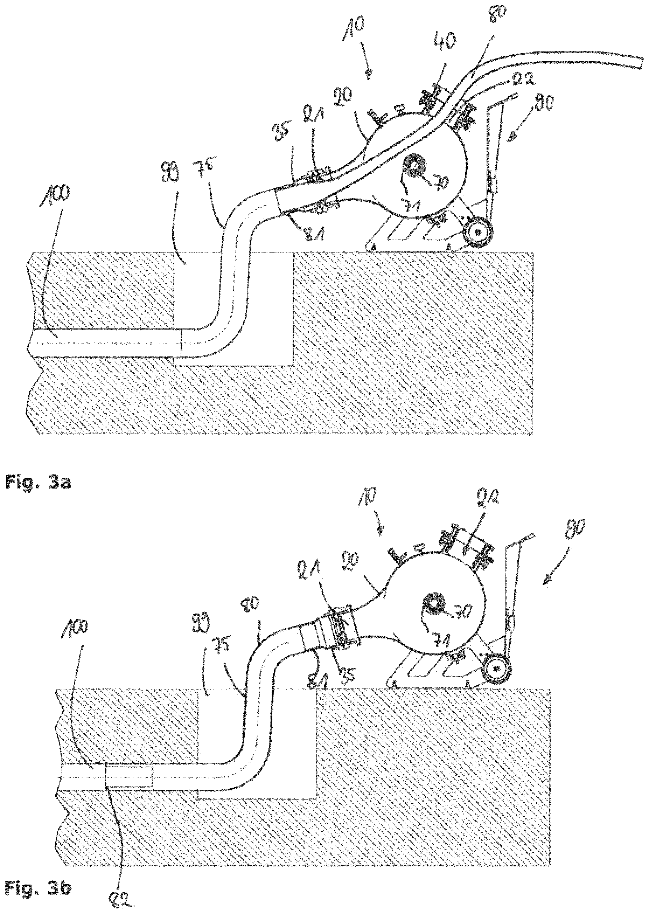

Die Fig. 3a bis 3c zeigen die verschiedenen Verfahrensschritte hinsichtlich des Einbringens der Rohrleitungsauskleidung 80 sowie der finalen Positionierung der Rohrleitungsauskleidung 80 mittels Einbringen eines Kalibrierschlauches 70.

In Fig. 3a ist zum einen dargestellt, dass die Rohrleitungsauskleidung 80 bereits am ersten Ende 81 am Vorsatzelement 35 befestigt ist. Des Weiteren ist der Verlauf des Stützschlauches 75 dargestellt. Der Stützschlauch 75 ist über das erste Ende 81 der Rohrleitungsauskleidung 80 gestülpt am Vorsatzelement 35 befestigt. Der Stützschlauch 75 wird über den Schacht 99 in Richtung des Rohrs 100 verlegt. Mit Hilfe des Stützschlauches 75 kann folglich die Rohrleitungsauskleidung 80 gezielter in Richtung des Rohres 100 verlegt werden. Gemäß des ersten Zustandes der Vorrichtung 10 ist an der zweiten Gehäuseöffnung 22 der Inverter-Aufsatz 40 befestigt. Der Kalibrierschlauch 70 verbleibt während des Einbringens der Rohrleitungsauskleidung 80 in das Rohr 100 auf der Aufrollvorrichtung 25.

Mittels Druckluft wird die Rohrleitungsauskleidung 80 in der gewünschten Länge in das Rohr 100 eingebracht. Dieser Zustand wird in Fig. 3b dargestellt.

Nachdem die Rohrleitungsauskleidung 80 vollständig in das Rohr 100 eingeführt ist, wird in einem zweiten Zustand der Vorrichtung 10 die Rohrleitungsauskleidung 80 final positioniert. Hierfür wird der Inverter-Aufsatz 40 von der zweiten Gehäuseöffnung 22 entfernt. Anstelle des Inverter-Aufsatzes 40 wird eine Abdeckplatte 25 an der zweiten Gehäuseöffnung 22 montiert. Vor dem Entfernen des Inverter-Aufsatzes 40 muss aus dem Inverter-Aufsatz 40 und/oder aus dem Gehäuse 20 der Druck bzw. die Druckluft abgelassen werden.

Die Abdeckplatte 45 wird derart an der zweiten Gehäuseöffnung 22 montiert, dass diese vollständig verschlossen ist. In diesem zweiten Zustand wird zunächst das erste Ende 81 der Rohrleitungsauskleidung 80 sowie der optional befestigte Stützschlauch 75 vom Vorsatzelement 35 entfernt. Der Kalibrierschlauch 70 wird durch Greifen des ersten Endes 71 in Richtung der ersten Gehäuseöffnung 21 gezogen und ebenfalls in umgestülpter Form am Vorsatzelement 35 befestigt.

Anschließend wird die Rohrleitungsauskleidung 80 mit dem ersten Ende 81 über das erste Ende 71 des Kalibrierschlauches 70 geschoben. Anschließend kann der Stützschlauch 75 über das erste Ende 81 der Rohrleitungsauskleidung 80 geschoben bzw. gestülpt werden. In dieser Anordnung können der Kalibrierschlauch, die Rohrleitungsauskleidung sowie der Stützschlauch am Vorsatzelement 35 befestigt werden.

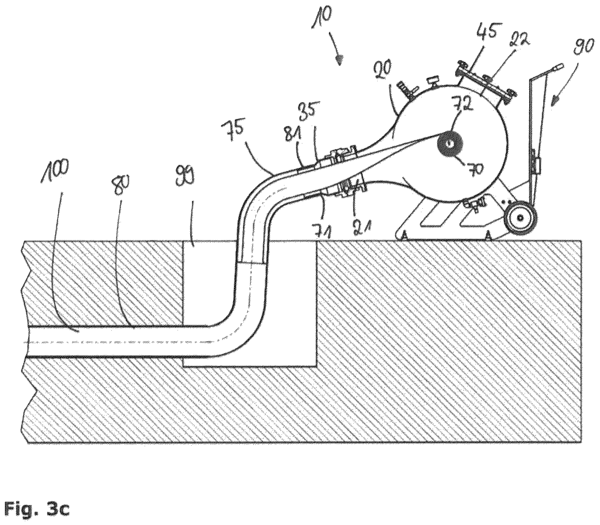

Wie in Fig. 3c dargestellt wird, kann in dieser befestigten Form der Kalibrierschlauch mittels Druckluftbeaufschlagung in die Rohrleitungsauskleidung 80 gestoßen werden. Aufgrund der Druckluftbeaufschlagung des Kalibrierschlauches 70 kann die Rohrleitungsauskleidung 80 nach außen gedrückt werden, so dass die Rohrleitungsauskleidung 80 beispielsweise mit der mit Harz getränkten Seite nach außen, d. h. in Richtung des Rohres 100 gepresst werden kann.

Sofern der Kalibrierschlauch 70 vollständig in der Rohrleitungsauskleidung 80 positioniert ist, kann die Rohrleitungsauskleidung 80 vollständig positioniert werden. Anschließend kann der Kalibrierschlauch 70 entfernt werden.

Es ist möglich, dass anschließend weitere Härtungsschritte vorgenommen werden. Die Härtung der Rohrleitungsauskleidung 80 kann beispielsweise mittels Dampf oder mittels Infrarotstrahlung erfolgen.

### Bezugszeichenliste

- 10: Vorrichtung
- 20: Gehäuse
- 21: erste Gehäuseöffnung
- 22: zweite Gehäuseöffnung
- 23: Gehäuseabschnitt
- 25: Aufrollvorrichtung
- 26: Druckluftanschluss
- 27: Manometer
- 30: Gehäuseöffnungsabschnitt
- 31: Flanschelement
- 33: Führungsabschnitt
- 35: Vorsatzelement
- 40: Inverter-Aufsatz
- 41: Flanschelement
- 42: Dichtring
- 43: Abdichtungsmanschette
- 44: erster Befestigungsfortsatz
- 45: Abdeckplatte
- 46: Rohrschelle
- 47: zweiter Befestigungsfortsatz
- 48: Mitte Inverter-Aufsatz
- 49: Inverter-Gehäuseabschnitt
- 50: flexibler Kammerabschnitt
- 51: Druckluft-Zugang
- 52: Druckluft-Auslass
- 53: 3-Wege-Ventil
- 54: Griff
- 55: Befestigungsmittel
- 70: Kalibrierschlauch
- 71: erstes Ende Kalibrierschlauch
- 72: zweites Ende Kalibrierschlauch
- 75: Stützschlauch
- 80: Rohrleitungsauskleidung
- 81: erstes Ende Rohrleitungsauskleidung
- 82: Innenseite
- 83: Außenseite
- 88: Spanngurt
- 90: Transportvorrichtung
- 91: Rolle
- 92: Griffabschnitt
- 93: Gestell
- 99: Schacht
- 100: Rohr

- A1: erste Gehäuseöffnungsachse
- A2: zweite Gehäuseöffnungsachse
- o: Winkel zwischen Gehäuseöffnungsachsen

## Patentansprüche

1. Vorrichtung (10) zum Einbringen einer Rohrleitungsauskleidung (80) in ein Rohr (100) und zum finalen Positionieren der in einem Rohr (100) eingebrachten Rohrleitungsauskleidung (80),
umfassend ein, insbesondere trommelförmiges, Gehäuse (20), wobei im Gehäuse (20) eine Aufrollvorrichtung (25) ausgebildet ist und an einer ersten Gehäuseöffnung (21) ein Vorsatzelement (35), insbesondere ein Vorsatzring, ausgebildet ist,
**dadurch gekennzeichnet, dass**
an einer mindestens zweiten Gehäuseöffnung (22) wahlweise eine Abdeckplatte (45) oder ein Inverter-Aufsatz (40) befestigt ist, wobei in einem ersten Zustand zum Einbringen der Rohrleitungsauskleidung (80) der Inverter-Aufsatz (40) und
in einem zweiten Zustand zum finalen Positionieren der Rohrleitungsauskleidung (80) die Abdeckplatte (45) an der zweiten Gehäuseöffnung (22) befestigt ist.

2. Vorrichtung (10) nach Anspruch 1,
**dadurch gekennzeichnet, dass**
der Inverter-Aufsatz (40) eine Abdichtungsmanschette (43) und/oder mindestens einen Druckluftanschluss (53) aufweist.

3. Vorrichtung (10) nach Anspruch 1 oder 2,
**dadurch gekennzeichnet, dass**
das Gehäuse (20) einen Druckluftanschluss (26) aufweist.

4. Vorrichtung (10) nach einem der Anspruche 1 bis 3,
**dadurch gekennzeichnet, dass**
im Gehäuse (20) ausgehend von der zweiten Gehäuseöffnung (22) bis zur ersten Gehäuseöffnung (21) verlaufend ein Führungsabschnitt (33) zur Durchführung der Rohrleitungsauskleidung (80) ausgebildet ist.

5. Vorrichtung (10) nach einem der vorangegangenen Ansprüche,
**dadurch gekennzeichnet, dass**
im ersten Zustand auf der Aufrollvorrichtung (25) ein Kalibrierschlauch (70) aufgewickelt ist.

6. Verfahren zum Einbringen einer Rohrleitungsauskleidung (80) in ein Rohr (100) und zum finalen Positionieren der in einem Rohr (100) eingebrachten Rohrleitungsauskleidung (80),
umfassend die Schritte:
a) Bereitstellen einer Vorrichtung (10) nach einem der Ansprüche 1 bis 5, wobei ein Kalibrierschlauch (70) auf der Aufrollvorrichtung (25) aufgewickelt ist,
b) Befestigen des Inverter-Aufsatzes (40) an der zweiten Gehäuseöffnung (22),
c) Durchführen eines ersten Endes (81) der Rohrleitungsauskleidung (80) von der zweiten Gehäuseöffnung (22) bis zur ersten Gehäuseöffnung (21) und Befestigen des ersten Endes (81) der Rohrleitungsauskleidung (80) an dem Vorsatzelement (35),
d) Aufbauen eines Druckes, insbesondere mittels Druckluft, am Inverter-Aufsatz (40) und/oder im Gehäuse (20),
e) Einbringen der Rohrleitungsauskleidung (80) in das Rohr (100).

7. Verfahren nach Anspruch 6,
**dadurch gekennzeichnet, dass**
zwischen Schritt c) und e) ausgehend vom Vorsatzelement (35) in Richtung des Rohres (100) abschnittsweise ein Stützschlauch (75) verlegt wird, wobei der Stützschlauch (75) über das erste Ende (81) der Rohrleitungsauskleidung (80) gestülpt am Vorsatzelement (35) befestigt wird.

8. Verfahren nach Anspruch 6 oder 7,
**gekennzeichnet durch**
den Schritt f), wonach nach vollständiger Durchführung des Schrittes e) aus dem Inverter-Aufsatz (40) und/oder aus dem Gehäuse (20) der Druck, insbesondere die Druckluft, abgelassen wird.

9. Verfahren nach Anspruch 8,
**dadurch gekennzeichnet, dass**
im Schritt g) der Inverter-Aufsatz (40) vom Gehäuse (20) entfernt und die Abdeckplatte (25) derart an der zweiten Gehäuseöffnung (22) befestigt wird, dass die zweite Gehäuseöffnung (22) verschlossen wird.

10. Verfahren nach Anspruch 8 oder 9,
**dadurch gekennzeichnet, dass**
im Schritt h) das erste Ende (81) der Rohrleitungsauskleidung (80) und der optional befestigte Stützschlauch (75) vom Vorsatzelement (35) entfernt werden.

11. Verfahren nach einem der Ansprüche 6 bis 10, insbesondere nach Anspruch 10,
**dadurch gekennzeichnet, dass**
im Schritt i) ein erstes Ende (71) des Kalibrierschlauchs (70) von der Aufrollvorrichtung (25) abgerollt und am Vorsatzelement (35) befestigt wird.

12. Verfahren nach Anspruch 11,
**dadurch gekennzeichnet, dass**
im Schritt j) das erste Ende (81) der Rohrleitungsauskleidung (80) und
optional der Stützschlauch (75) über das erste Ende (71) des Kalibrierschlauchs (70) gestülpt und am Vorsatzelement (35) befestigt wird.

13. Verfahren nach einem der Ansprüche 6 bis 12, insbesondere nach Anspruch 10 oder 12,
**dadurch gekennzeichnet, dass**
im Schritt k) in dem Gehäuse (20), insbesondere mittels Druckluft, ein Druck aufgebaut wird, wobei der Kalibrierschlauch (70) aufgrund des Druckaufbaus in der Rohrleitungsauskleidung (80) positioniert und aufgeweitet und dadurch die Rohrleitungsauskleidung (80) final positioniert wird.

## Claims

1. An apparatus (10) for inserting a pipeline lining (80) into a pipe (100) and for final positioning of the pipeline lining (80) inserted in a pipe (100), comprising a housing (20), especially a drum-shaped housing, wherein a winding apparatus (25) is formed in the housing (20) and an attachment element (35), especially an attachment ring, is formed on a first housing opening (21),
**characterised in that**
either a cover plate (45) or an inverter add-on (40) is fastened to an at least second housing opening (22), wherein, in a first state for inserting the pipeline lining (80), the inverter add-on (40) and,
in a second state for final positioning of the pipeline lining (80), the cover plate (45) is fastened to the second housing opening (22).

2. The apparatus (10) according to claim 1,
**characterised in that**
the inverter add-on (40) has a sealing sleeve (43) and/or at least one compressed air port (53).

3. The apparatus (10) according to claim 1 or claim 2,
**characterised in that**
the housing (20) has a compressed air port (26).

4. The apparatus (10) according to one of claims 1 to 3,
**characterised in that**
a guide portion (33) for guiding through the pipeline lining (80) runs in the housing (20) starting from the second housing opening (22) to the first housing opening (21).

5. The apparatus (10) according to one of the preceding claims, **characterised in that**
in the first state a calibration tube (70) is wound on the winding apparatus (25).

6. A method for inserting a pipeline lining (80) into a pipe (100) and for final positioning of the pipeline lining (80) inserted in a pipe (100),
the method comprising the following steps:
a) providing an apparatus (10) according to one of claims 1 to 5, wherein a calibration tube (70) is wound on the winding apparatus (25),
b) fastening the inverter add-on (40) to the second housing opening (22),
c) guiding a first end (81) of the pipeline lining (80) from the second housing opening (22) to the first housing opening (21) and fastening the first end (81) of the pipeline lining (80) to the attachment element (35),
d) building up a pressure, especially by means of compressed air, at the inverter add-on (40) and/or in the housing (20),
e) inserting the pipeline lining (80) into the pipe (100).

7. The method according to claim 6,
**characterised in that**
between step c) and e), a support tube (75) is laid in portions in the direction of the pipe (100) starting from the attachment element (35), wherein the support tube (75), drawn over the first end (81) of the pipeline lining (80), is fastened to the attachment element (35).

8. The method according to claim 6 or claim 7,
**characterised by**
the step f), in which, once step e) has been completed, the pressure, especially the compressed air, is discharged from the inverter add-on (40) and/or from the housing (20).

9. The method according to claim 8,
**characterised in that**
in step g) the inverter add-on (40) is removed from the housing (20) and the cover plate (25) is fastened to the second housing opening (22) in such a way that the second housing opening (22) is closed.

10. The method according to claim 8 or claim 9,
**characterised in that**
in step h) the first end (81) of the pipeline lining (80) and the optionally fastened support tube (75) are removed from the attachment element (35).

11. The method according to one of claims 6 to 10, especially according to claim 10,
**characterised in that**
in step i) a first end (71) of the calibration tube (70) is unwound from the winding apparatus (25) and is fastened to the attachment element (35).

12. The method according to claim 11,
**characterised in that**
in step j) the first end (81) of the pipeline lining (80) and optionally the support tube (75) is drawn over the first end (71) of the calibration tube (70) and is fastened to the attachment element (35).

13. The method according to one of claims 6 to 12, especially according to claim 10 or claim 12,
**characterised in that**
in step k) a pressure is built up in the housing (20), especially by means of compressed air, wherein the calibration tube (70) is positioned and expanded in the pipeline lining on account of the pressure build-up, and the pipeline lining (80) is thus arranged in its final position.

## Revendications

1. Dispositif (10) destiné à introduire un revêtement de canalisation (80) dans un tuyau (100) et destiné au positionnement final du revêtement de canalisation (80) introduit dans un tuyau (100),
comprenant un boîtier (20) en particulier en forme de tambour, dans lequel un dispositif d'enroulement (25) est réalisé dans le boîtier (20) et un élément additionnel (32), en particulier une bague additionnelle, est réalisé sur une première ouverture de boîtier (21),
**caractérisé en ce**
**qu'**au choix une plaque de recouvrement (45) ou un accessoire d'inverseur (40) est bloquée/bloqué sur au moins une deuxième ouverture de boîtier (22), dans lequel l'accessoire d'inverseur (40) est fixé sur la deuxième ouverture de boîtier dans un premier état pour introduire le revêtement de canalisation (80) et la plaque de recouvrement (45) est fixée sur la deuxième ouverture de boîtier (22) dans un deuxième état pour le positionnement final du revêtement de canalisation (80).

2. Dispositif (10) selon la revendication 1,
**caractérisé en ce que**
l'accessoire d'inverseur (40) présente un manchon d'étanchéification (43) et/ou au moins un raccord d'air comprimé (53).

3. Dispositif (10) selon la revendication 1 ou 2, **caractérisé en ce que**
le boîtier (20) présente un raccord d'air comprimé (26).

4. Dispositif (10) selon l'une quelconque des revendications 1 à 3,
**caractérisé en ce que**
une section de guidage (33) destiné à faire passer le revêtement de canalisation (80) est réalisée dans le boîtier (20) en s'étendant depuis la deuxième ouverture de boîtier (22) jusqu'à la première ouverture de boîtier (21) .

5. Dispositif (10) selon l'une quelconque des revendications précédentes,
**caractérisé en ce que**
un tuyau flexible d'étalonnage (70) est enroulé dans le premier état sur le dispositif d'enroulement (25).

6. Procédé destiné à introduire un revêtement de canalisation (80) dans un tuyau (100) et destiné au positionnement final du revêtement de canalisation (80) introduit dans un tuyau (100),
comprenant les étapes :
a) de fourniture d'un dispositif (10) selon l'une quelconque des revendications 1 à 5, dans lequel un tuyau flexible d'étalonnage (70) est enroulé sur le dispositif d'enroulement (25),
b) de fixation de l'accessoire d'inverseur (40) sur la deuxième ouverture de boîtier (22),
c) de passage d'une première extrémité (81) du revêtement de canalisation (80) depuis la deuxième ouverture de boîtier (22) jusqu'à la première ouverture de boîtier (21) et de fixation de la première extrémité (81) du revêtement de canalisation (80) sur l'élément additionnel (35),
d) d'établissement d'une pression, en particulier au moyen de l'air comprimé, sur l'accessoire d'inverseur (40) et/ou dans le boîtier (20),
e) d'introduction du revêtement de canalisation (80) dans le tuyau (100).

7. Procédé selon la revendication 6,
**caractérisé en ce que**
un tuyau flexible d'appui (75) est posé par endroits en partant de l'élément additionnel (35) en direction du tuyau (100) entre l'étape c) et e),
dans lequel le tuyau flexible d'appui (75) est fixé sur l'élément additionnel (35) de manière retournée au-dessus de la première extrémité (81) du revêtement de canalisation (80) .

8. Procédé selon la revendication 6 ou 7,
**caractérisé par**
l'étape f), selon laquelle, après la réalisation totale de l'étape e), la pression, en particulier l'air comprimé, est évacuée hors de l'accessoire d'inverseur (40) et/ou hors du boîtier (20).

9. Procédé selon la revendication 8,
**caractérisé en ce que**
dans l'étape g), l'accessoire d'inverseur (40) est retiré du boîtier (20) et la plaque de recouvrement (25) est fixée de telle manière sur la deuxième ouverture de boîtier (22) que la deuxième ouverture de boîtier (22) est fermée.

10. Procédé selon la revendication 8 ou 9,
**caractérisé en ce que**
dans l'étape h), la première extrémité (81) du revêtement de canalisation (80) et le tuyau flexible d'appui (75) fixé en option sont retirés de l'élément additionnel (35).

11. Procédé selon l'une quelconque des revendications 6 à 10, en particulier selon la revendication 10, **caractérisé en ce que**
dans l'étape i), une première extrémité (71) du tuyau flexible d'étalonnage (70) est déroulée du dispositif d'enroulement (25) et est fixée sur l'élément additionnel (35) .

12. Procédé selon la revendication 11,
**caractérisé en ce que**
dans l'étape j), la première extrémité (81) du revêtement de canalisation (80) et en option le tuyau flexible d'appui (75) est retourné au-dessus de la première extrémité (71) du tuyau flexible d'étalonnage (70) et est fixé sur l'élément additionnel (35).

13. Procédé selon l'une quelconque des revendications 6 à 12, en particulier selon la revendication 10 ou 12, **caractérisé en ce que**
dans l'étape k), une pression est établie dans le boîtier (20), en particulier au moyen de l'air comprimé, dans lequel le tuyau flexible d'étalonnage (70) est positionné et est élargi dans le revêtement de canalisation (80) en raison de l'élaboration de pression et le revêtement de canalisation (80) adopte ainsi son positionnement final.
